(19) Europäisches Patentamt
European Patent Office
Office européen des brevets

(11) EP 1 533 708 A2

## (12) EUROPEAN PATENT APPLICATION

(43) Date of publication:
25.05.2005 Bulletin 2005/21

(51) Int Cl.$^7$: G06F 13/40, H04N 7/22

(21) Application number: 04024770.2

(22) Date of filing: 18.10.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 27.10.2003 JP 2003365912

(71) Applicant: Pioneer Corporation
Meguro-ku, Tokyo (JP)

(72) Inventors:
• Iwai, Tomoaki Pioneer Ohmori Plant
Tokyo (JP)

• Noguchi, Ryoji Pioneer Ohmori Plant
Tokyo (JP)
• Nohara, Manabu Pioneer Ohmori Plant
Tokyo (JP)

(74) Representative:
Klingseisen, Franz, Dipl.-Ing. et al
Patentanwälte,
Dr. F. Zumstein,
Dipl.-Ing. F. Klingseisen,
Postfach 10 15 61
80089 München (DE)

## (54) Signal transmitting apparatus and method

(57) A multiplexed signal provided by superimposing a control data signal and a control clock signal on a video signal is generated and transmitted through a predetermined transmitting path. The received multiplexed signal is separated into each signal included in the multiplexed signal on the signal receiving side. Further, synchronization of each bit constituting the control data signal and a clock pulse of the control clock signal is secured by delaying the control clock signal more than a signal delay time that is caused by superimposing/separating processing on the signal sending side and the signal receiving side.

FIG.1

## Description

### BACKGROUND OF THE INVENTION

#### 1. Field of the Invention

The present invention relates to a signal transmitting apparatus and a signal transmitting method for multiplexing and transmitting a digital video signal, a control data signal of the video image and a control clock signal in a single transmitting path.

#### 2. Description of the Related Art

DVI (Digital Visual Interface) is widely spread as a standard of interfaces for connecting a personal computer (hereinaf ter simply called "PC" ) and a PC monitor, and connecting digital video information devices such as a flat display panel, etc. The DVI is an interface standard defined by DDWG (Digital Display Working Group) as a standardizing group relating to the digital interface for a display signal. The DVI is an interface including various digital signals such as each color pixel signal of so-called R, G and B and a pixel clock signal as a video signal, an I-square-C (hereinafter simply called "I2C") bus signal used as a display information signal, etc. Here, the I2C is an abbreviation of Inter Integrated Circuit, and is a serial interface for transmitting the control clock signal and the control data signal by using two signal lines of a serial clock (hereinafter simply called "SCL") and serial data (hereinafter simply called "SDA").

In the conventional digital interface using the DVI as disclosed, for example, in Japanese Patent Application Kokai No.2002-366340, an optical fiber cable was used in the transmission of the video signal and a metallic cable was used in the transmission of the display information signal. Therefore, the connection between the video information devices became complicated and it was defective in convenient and economical properties when connecting the video information device. Further, since the number of cables for connecting the video information devices to each other and the number of kinds of the cables were large, the possibility of generation of a malfunction such as a connecting defect, etc. was high.

### SUMMARY OF THE INVENTION

The problem to be solved by the present invention is to provide a signal transmitting apparatus and the method capable of sending/receiving various signals included in the DVI through a single transmitting path.

According to one aspect of the present invention as recited in claim 1, there is provided a signal transmitting apparatus for sending and receiving a signal group including at least an information signal, a control data signal based on a reference clock, and a control clock signal through a transmitting path between terminals, comprises a multiplexed signal sending section for generating a multiplexed signal by superimposing the control data signal and the control clock signal onto the information signal to send the multiplexed signal; a reception signal separating section for receiving the multiplexed signal and separating the multiplexed signal into the information signal, the control data signal and the control clock signal; and a clock period extending section for setting the clock period of the control clock signal so as to be longer than the clock period of the reference clock.

According to another aspect of the present invention as recited in claim 9, there is provided a signal transmitting method for sending and receiving a signal group including at least an information signal, a control data signal based on a reference clock, and a control clock signal through a transmitting path between terminals, comprises a multiplexed signal sending step for generating a multiplexed signal by superimposing the control data signal and the control clock signal onto the information signal to send the multiplexed signal; a reception signal separating step for receiving the multiplexed signal and separating the multiplexed signal into the information signal, the control data signal and the control clock signal; and a clock period extending step for setting the clock period of the control clock signal so as to be longer than the clock period of the reference clock.

### BRIEF DESCRIPTION OF THE DRAWINGS

Fig. 1 is a view illustrating a configuration of a signal transmitting apparatus of the present invention;
Fig. 2 is a time chart showing a time change of an I2C bus signal transmitted in the device of Fig. 1;
Fig. 3 is an explanatory view showing the generation of a signal delay time caused by multiplexing/separating processing in the device of Fig. 1;
Fig. 4 is a time chart in which the time change of the I2C bus signal transmitted in the device of Fig. 1 is shown by including the signal delay time;
Fig. 5 is a block diagram showing the construction of a clock delay circuit 14 in a signal sending section 10 of Fig. 1;
Fig. 6 is a time chart showing a time change of a signal at each of points (a) to (d) within the clock delay circuit 14 of Fig. 5; and
Fig. 7 is a time chart showing a time change of a signal at each of points (e) to (h) within the clock delay circuit 14 of Fig. 5.

### DETAILED DESCRIPTION OF THE INVENTION

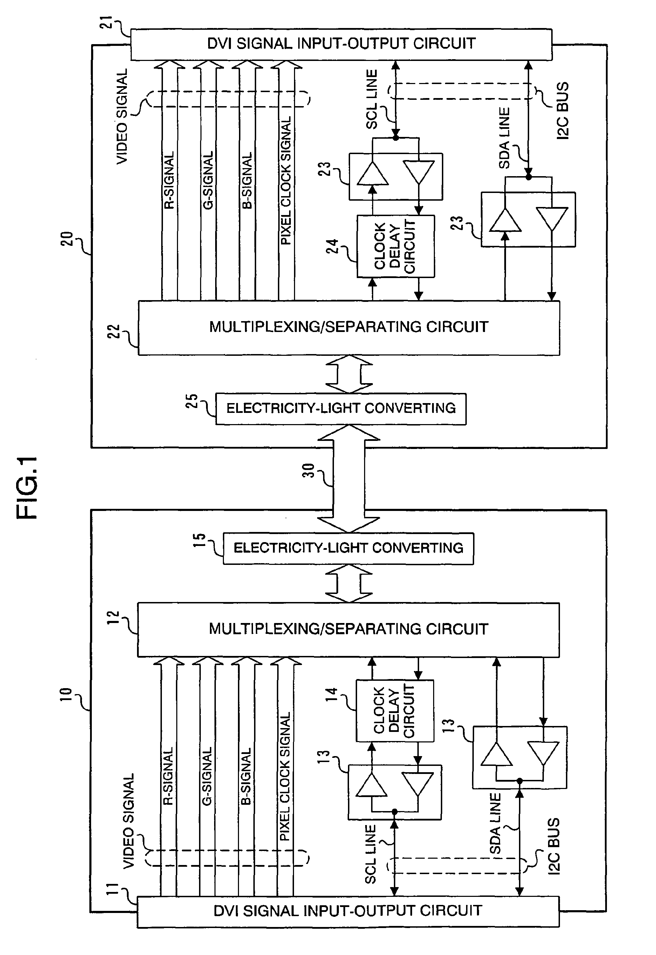

Fig. 1 shows a signal transmitting apparatus and the method according to an embodiment of the present invention. In this figure, a signal sending section 10 is provided in e.g., a video information device such as PC, etc., and is a section for multiplexing and transmitting various signals included in DVI from the video information device through, e.g., one optical fiber cable. As shown in Fig. 1, the signal sending section 10 is mainly constructed from a DVI signal input-output circuit 11, a multiplexing/separating circuit 12, a bidirectional buffer circuit 13, a clock delay circuit 14 and an electricity-light signal converting circuit 15.

On the other hand, a signal receiving section 20 is provided in, for example, a video information device such as a flat display panel, etc. , and is connected to the signal sending section 10 via an optical fiber cable 30. As shown in Fig. 1, the signal receiving section 20 is mainly constructed from an electricity-light signal converting circuit 25, a multiplexing/separating circuit 22, a clock delay circuit 24, a bidirectional buffer circuit 23 and a DVI signal input-output circuit 21.

An operation of the signal transmitting apparatus in the embodiment will next be described. First, each color pixel signal of R, G, B and a video signal of a pixel clock signal, etc., and each of I2C bus signals (SCL, SDA) used as a display information signal are supplied from another video information device (not shown) having the signal sending section 10 to the multiplexing/separating circuit 12 by way of the DVI signal input-output circuit 11. The multiplexing/separating circuit 12 performs multiplexing processing using parallel-serial conversion on the supplied signals to convert these signals into a serial signal. Thereafter, the serial signal is converted into an optical signal of a predetermined level by the electricity-light signal converting circuit 15 and is sent out to the optical fiber cable 30.

In contrast to this, the optical signal transmitted to the signal receiving section 20 through the optical fiber cable 30 is converted into an electric signal in the electricity-light signal converting circuit 25 of the signal receiving section 20, which is then supplied to the multiplexing/separating circuit 22. Serial-parallel conversion is further performed in the multiplexing/separating circuit 22 for the supplied signal. Thereafter, the signal is separated (or demultiplexed) into various DVI signals included in the signal, which are then supplied to the DVI signal input-output circuit 21. The various DVI signals are then supplied from the DVI signal input-output circuit 21 to each circuit of the video information device (not shown) having the signal receiving section 20 in predetermined format and timing.

Signals applied to the I2C bus are bi-directionally transmitted between the signal sending section 10 and the signal receiving section 20. Therefore, with respect to these signals, multiplexing/separating transmission processing similar to that in the above description is also performed from the signal receiving section 20 to the signal sending section 10. In other words, the multiplexing/separating circuits 12 and 22 reciprocally operate, and the electricity-light signal converting circuits 15 and 25 reciprocally operate for a signal transmitted from the signal receiving section 20 to the signal sending section 10 among the signals applied to the I2C bus.

Arrows in Fig. 1 show the flows of main signals between the respective constructional elements explained above. For example, with respect to signals associated with the main signals such as a response signal, a monitor signal, etc., there is also a case in which these signals are transmitted in the direction reverse to the direction of the arrows shown in Fig. 1. Further, the arrow of Fig. 1 shows the conceptual flow of a signal between the respective constructional elements, and it is not necessary to send and receive each signal within the actual device in accordance with a path shown by the arrow.

The signals concerning the I2C bus used within the embodiment will next be described. As mentioned above, the I2C bus is a bidirectional bus constructed by two signal lines of a serial data (SDA) line and a serial clock (SCL) line. Any interface device (hereinafter simply referred to as "device") for performing communication through the I2C bus is connected to the I2C bus in a so-called "wired-AND" state in which its output impedance becomes high impedance in a non-operating state. Each device connected to the I2C bus can bi-directionally transmit a signal. A device having a so-called master station terminal function and taking the leadership of the signal transmission is called a master. A device corresponding to a so-called slave station terminal and operated by commands of the master is called a slave. The functions of the master and the slave are not fixed for each device, but each device suitably performs both the functions in accordance with e . g . , a processing mode of the signal transmission. In this connection, the master generates an SCL signal for controlling transfer timing of data on the bus, and a device address-designated from the master through the SDA line becomes the slave.

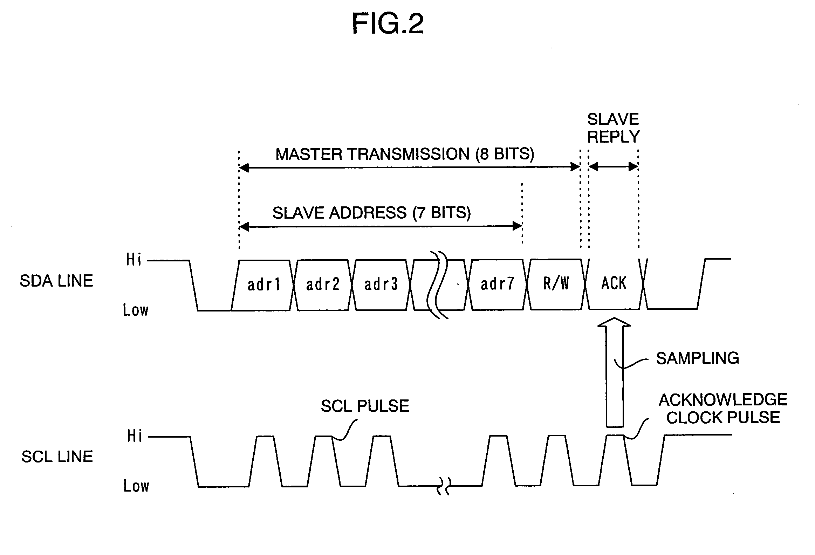

As shown in the time chart of Fig. 2, the length of each byte of serial data transferred from the master on the SDA line of the I2C bus is 8 bits. An acknowledge (ACK) signal as a confirmation signal from the slave is replied from the slave in which the acknowledge signal is added to the tail of each byte. Further, each bit constituting the serial data on the SDA line is held in synchronization between this bit and a clock pulse on the SCL line.

The ACK signal is determined as valid by recognizing that the SDA line is a low level state by the master. Namely, the slave sending a reply of the valid ACK signal must set the SDA line to the low level in accordance with the rising of an acknowledge clock pulse on the SCL line for sampling the ACK signal. With respect to the pulse on the SCL line, both the normal SCL pulse and the acknowledge clock pulse are assumed to be generated by the master.

As shown in the time chart of Fig. 2, the above slave address is constructed by 7 bits within one byte, and the remaining one bit shows the transfer direction of data. When the one bit is a low level ("0"), the slave address means that data are written from the master to the slave. In the case of a high level ("1"), the slave address means that the master reads data from the slave.

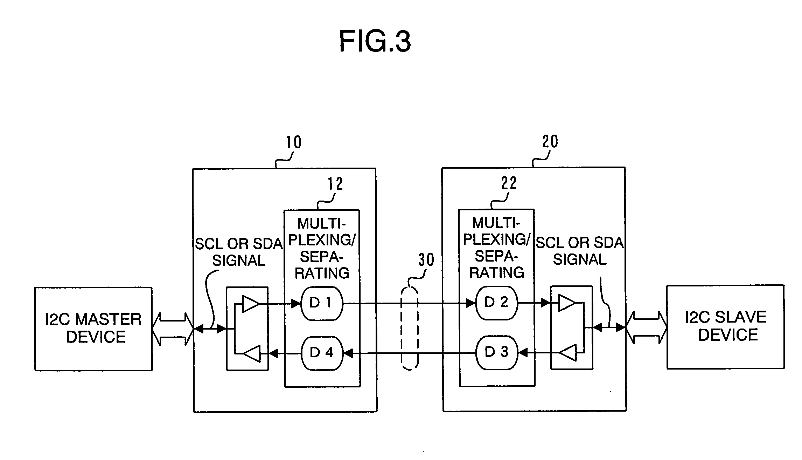

With respect to a bidirectional signal such as the I2C bus signal, multiplex processing and separating processing of the transmitting signal are performed in both the signal sending section 10 and the signal receiving section 20. Accordingly, there is a case in which delay generated in processing steps of the multiplexing and the separating is accumulated and has an influence on the transmission of the signal. For example, a case in which the slave designated in accordance with the address designation from the master sends a reply to the master, i . e . , the reply of the ACK signal of Fig. 2 will be considered as an example. In this case, after the master designates a predetermined address, the delay time generated until the reception of the ACK signal from the designated slave is set to D. As typically shown in the operation explanatory view of Fig. 3, the delay time D becomes the following value.

$$D=D1+D2+D3+D4$$

Here, D1 shows a delay time in the multiplex processing in the signal sending section 10, and D2 shows a delay time in the separating processing in the signal receiving section 20. Further, D3 shows a delay time in the multiplex processing of the signal receiving section 20 and D4 shows a delay time in the separating processing of the signal sending section 10.

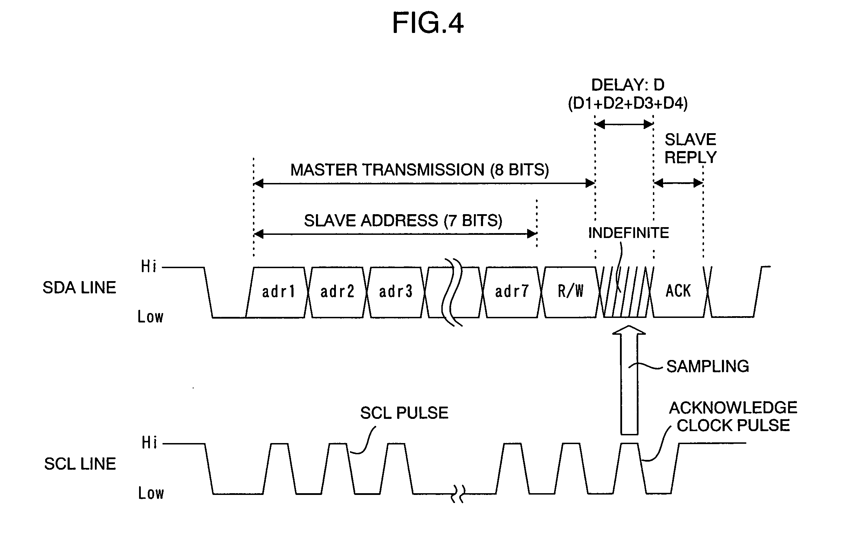

When such delay is generated, the synchronization between data on the SDA line and the clock pulse on the SCL line is lost. As shown in the time chart of Fig. 4, an indefinite or indeterminate data portion on the SDA line generated by the delay is sampled by the acknowledge clock pulse, and the master can not identify the ACK signal from the slave.

To prevent the generation of such a defect, the clock delay circuit 14 is provided for the SCL signal of the I2C bus in the embodiment so as to synchronize the ACK signal and the acknowledge clock pulse.

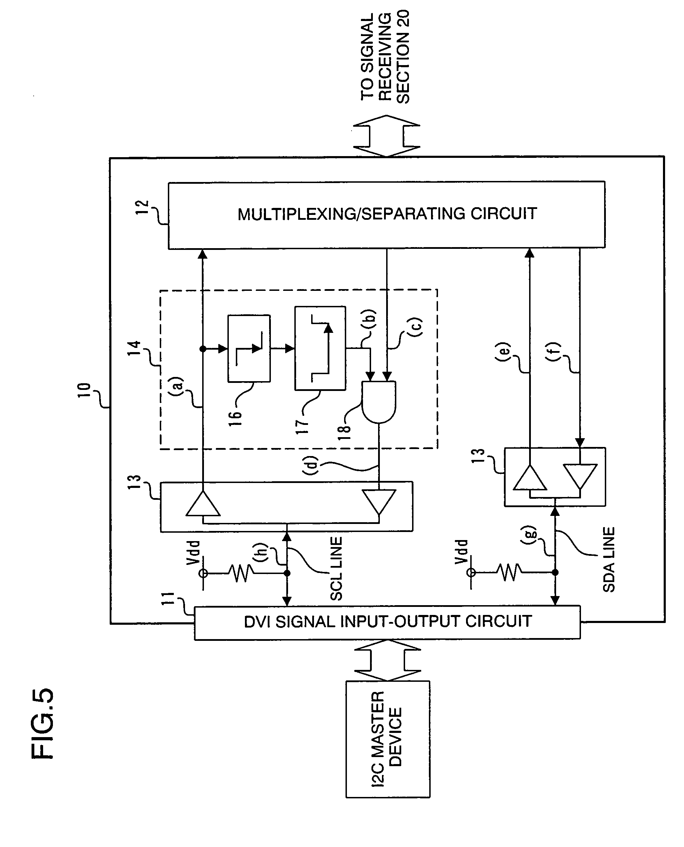

In the following description, the construction of the clock delay circuit 14 will be described on the basis of the block diagram of Fig. 5. Fig. 5 shows the construction by extracting only a portion relating to the I2C bus signal in the signal sending section 10 of Fig. 1. A description for the other circuit portions within the signal sending section 10 is omitted in Fig. 5.

As shown in Fig. 5, the clock delay circuit 14 is mainly constructed from a trailing edge detecting circuit (hereinafter simply referred to as "detecting circuit") 16, a low level holding circuit (hereinafter simply referred to as "holding circuit") 17, and a gate circuit 18. Each signal line of the I2C bus is connected to the bus line in the so-called wired-AND state as mentioned above. Therefore, both the respective lines of the SCL and the SDA are set to be pulled up to a power voltage Vdd by a pull-up resistor R.

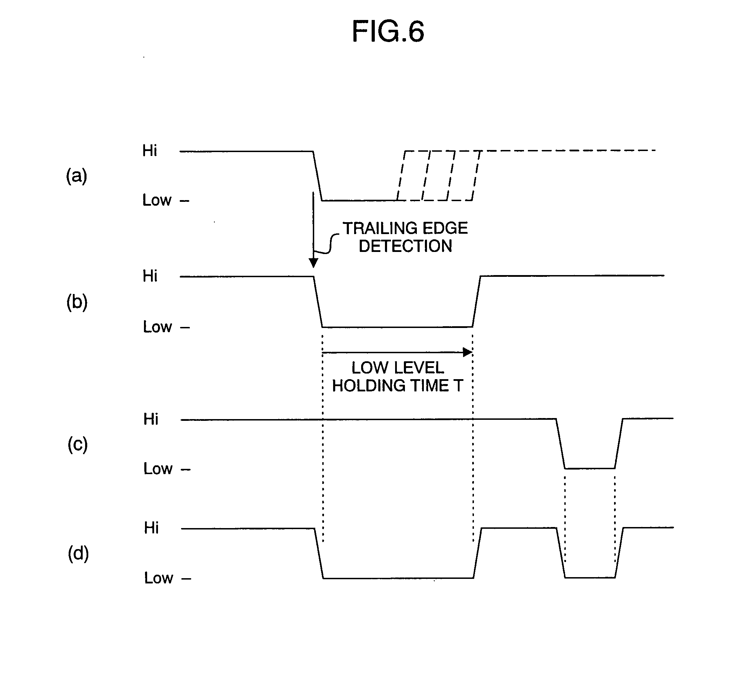

The operation of the clock delay circuit 14 shown in Fig. 5 will next be described with reference to the time chart of Fig. 6. The respective time charts of (a) to (d) of Fig. 6 show time changes of signals at respective points (a) to (d) shown within the block diagram of Fig. 5.

When the master of the I2C bus connected to the signal sending section 10 first switches the SCL signal from the high level to the low level, the level of the point (a) of Fig. 5 is changed from the high level to the low level as shown by (a) of Fig. 6.

The detecting circuit 16 detects a trailing edge of this signal level and notifies such information to the holding circuit 17. For example, the detecting circuit 16 may be constructed by a flip flop circuit of a D-type, an RS type, etc., or may detect the trailing edge while the signal level of the point (a) of Fig. 5 is sampled at high speed.

The holding circuit 17 is a circuit for setting the detecting notification from the detecting circuit 16 as a trigger and holding the signal level of the point (b) of Fig. 5 which is an output thereof to a low level over a predetermined period of time T. Namely, even when the signal level of the point (a) of Fig. 5 is changed to the high level during the above period T as shown by the time charts of (a) and (b) of Fig. 6, the signal level of the point (b) of Fig. 5 is held in the state of the low level. For example, the holding circuit 17 may be constructed by a monostable multivibrator circuit having a time constant according to the length of the period T, or may be also constructed by using a counter circuit for counting a predetermined number of clock pulses of high speed and a digital comparator for comparing the counting value with a reference value corresponding to the predetermined period T and judging the counting value.

Each of the signal level of the point (b) as an output of the holding circuit 17 and the signal level (point (c) of Fig. 5) of the SCL received from the signal receiving section 20 is applied to each of two inputs of the gate circuit 18. The gate circuit 18 is a so-called AND-gate circuit and a logical product of such two input signals is output at the point (d). This situation is shown in time series in each of the time charts of (b) to (d) of Fig. 6. The logical product signal of the signal level of (b) and (c) of Fig. 6 is shown in (d) of Fig. 6.

The point (d) of Fig. 5 is connected to the SCL line of the I2C bus through a buffer gate of the buffer circuit 13. Accordingly, the SCL line of the master becomes the low level during the predetermined period T from the trailing edge of the SCL pulse, or during a period in which the SCL line of the slave connected to the signal receiving section 20 is at the low level.

All the devices are connected to the I2C bus by the wired AND. While one device holds its SCL line to the low level, the other devices cannot set the SCL line to the high level. Further, while the SCL line is at the low level, the data transmission between the respective devices are in a wait (standby) state.

Namely, in the case of the embodiment, the master can not set the SCL line to the high level until the predetermined period T has elapsed. Namely, after one SCL clock pulse is outputted, the master can not output the next SCL clock pulse unless at least the predetermined period T has elapsed from the trailing edge of the one clock pulse. While the SCL line is the low level, the data transmission between the respective devices are in the standby state. Accordingly, data outputted onto the SDA line by the master are held onto the SDA line in synchronization with the previous SCL clock pulse. The delay of the predetermined period T added to the clock pulse on the SCL line is also added to the acknowledge clock pulse similarly generated by the maser as well as the SCL clock pulse.

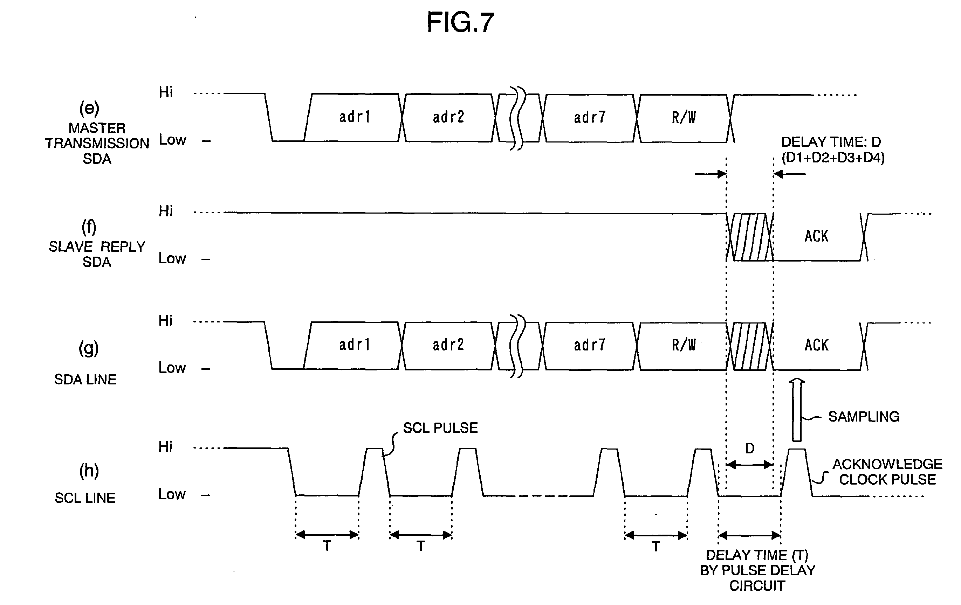

The above operation will be further described with reference to the time chart shown in Fig. 7. The time chart of Fig. 7 shows a time change of a signal at each of points (e) to (h) of Fig. 5 which shows the configuration of the clock delay circuit 14. Accordingly, (e) of Fig. 7 shows data on the SDA line transmitted from the master to the slave. Similarly, (f) of Fig. 7 shows data on the SDA line replied from the slave, and (g) of Fig. 7 shows data on the SDA line in which the above (e) and (f) are superposed. Further, (h) of Fig. 7 shows a clock pulse on the SCL line.

First, as mentioned above, a predetermined delay time T is added to the clock pulse on the SCL line shown in (h) of Fig. 7 by the operation of the clock delay circuit 14. In accordance with this addition, the delay synchronized with the SCL pulse is added to every bit of slave address data outputted from the master onto the SDA line. Namely, as shown in Fig. 7, the time length of each of the bits constituting the address data is extended by the delay time T.

When the delay time D (D=D1+D2+D3+D4) caused by the multiplexing/separating processing in both the signal sending section 10 and the signal receiving section 20 has elapsed after the slave address data are transmitted from the master, the ACK signal from the slave appears on the SDA line ((f) of Fig. 7) of Fig. 5. Accordingly, the signal on the SDA line in the I2C bus is provided as shown in (g) of Fig. 7.

In this embodiment, as can be seen from (h) of Fig. 7, the delay time T added to the acknowledge clock pulse is determined so as to be longer than the delay time D caused by the multiplexing/separating processing by the clock delay circuit 14. Thus, no indefinite data on the SDA line caused by the delay time D are fetched by the acknowledge clock pulse, and the ACK signal replied from the slave can be precisely sampled.

As explained above, according to the present invention, there is provided a signal transmission apparatus for sending and receiving a signal group including at least an information signal, a control data signal based on a reference clock, and a control clock signal through a transmitting path between terminals, which includes the multiplexing/separating circuits 12 and 22 which correspond to multiplexed signal sending means for superposing the control data signal and the control clock signal onto the information signal and generating and sending a multiplexed signal, and also correspond to reception signal separating means for receiving the multiplexed signal and separating the multiplexed signal into the information signal, the control data signal and the control clock signal; and the clock delay circuits 14 and 24 corresponding to clock period extending means for setting the clock period of the control clock signal to be longer than the clock period of the reference clock.

Further, the clock delay circuit includes the detecting circuit 16 corresponding to detecting means for detecting the trailing edge of the control clock signal transmitted to the terminal; the holding circuit 17 corresponding to level holding means for holding its output signal level to a low level over a predetermined period from a detected time point of the trailing edge; and the gate circuit 18 corresponding to gate means for outputting a logical product of the output signal of the level holding means and the control clock signal replied from the terminal as the control clock signal.

Accordingly, in accordance with the embodiment of the present invention, the I2C bus signal requiring the bidirectional transmission conventionally using the metallic cable can be multiplexed for transmission through one optical fiber cable together with the video signal. It is possible to reduce cost of the cable required to connect the video information devices. Further, since all the video information devices are connected by the optical fiber cable, the signal sending section and the signal receiving section of the signal transmitting apparatus can be electrically separated from each other. Accordingly, it is possible to prevent a fault due to external noises and a change in earth electric potential.

Further, since the synchronization of the clock signal on the SCL line constituting the I2C bus and the data signal on the SDA line is realized by the clock delay circuit easily structured, the signal transmitting apparatus in the embodiment can be provided at low cost.

In the above explanation, the example using the optical fiber cable in the transmitting path between the signal sending section and the signal receiving section of the signal transmitting apparatus has been explained. However, this embodiment is not limited to such an example. For example, optical radio and small power radio using an infrared ray, etc. may be also used as such a transmitting path.

The invention has been described with reference to the preferred embodiments thereof. It should be understood by those skilled in the art that a variety of alterations and modifications may be made from the embodiments described above. It is therefore contemplated that the appended claims encompass all such alterations and modifications.

**Claims**

1. A signal transmitting apparatus for sending and receiving a signal group including at least an information signal, a control data signal based on a reference clock, and a control clock signal through a transmitting path between terminals, comprising:

   a multiplexed signal sending section for generating a multiplexed signal by superimposing said control data signal and the control clock signal onto said information signal to send said multiplexed signal;
   a reception signal separating section for receiving said multiplexed signal and separating said multiplexed signal into said information signal, said control data signal and said control clock signal; and
   a clock period extending section for setting the clock period of said control clock signal so as to be longer than the clock period of said reference clock.

2. The signal transmitting apparatus according to claim 1, wherein said control data signal includes an address signal for designating one of said terminals.

3. The signal transmitting apparatus according to claim 1, wherein said control data signal includes a response signal from one of said terminal.

4. The signal transmitting apparatus according to claim 1, wherein each bit of a time series signal constituting said control data signal is synchronized with the clock period of said control clock signal.

5. The signal transmitting apparatus according to claim 1, wherein said signal period extending section includes:

   a detecting section for detecting the trailing edge of the control clock signal transmitted to said terminal;
   a level holding section for holding the output signal level thereof to a low level over a predetermined period from a detected time point of said trailing edge; and
   a gate section for outputting a logical product of the output signal of said level holding section and the control clock signal replied from said terminal as said control clock signal.

6. The signal transmitting apparatus according to claim 1, wherein said information signal is avideo information signal.

7. The signal transmitting apparatus according to claim 1, wherein said multiplexed signal is an optical signal, and said transmitting path is an optical fiber cable.

8. The signal transmitting apparatus according to claim 1, wherein said information signal, the control data signal and the control clock signal are signals conforming to a DVI standard.

9. A signal transmitting method for sending and receiving a signal group including at least an information signal, a control data signal based on a reference clock, and a control clock signal through a transmitting path between terminals, comprising:

   a multiplexed signal sending step for generating a multiplexed signal by superimposing said control data signal and the control clock signal onto said information signal to send said multiplexed signal;
   a reception signal separating step for receiving said multiplexed signal and separating said multiplexed signal into said information signal, said control data signal and said control clock signal; and
   a clock period extending step for setting the clock period of said control clock signal so as to be longer than the clock period of said reference clock.

# FIG.1

# FIG.2

SLAVE
REPLY

MASTER TRANSMISSION (8 BITS)

SLAVE ADDRESS (7 BITS)

SDA LINE
Hi
Low

adr1 | adr2 | adr3 | adr7 | R/W | ACK

SAMPLING

SCL PULSE

ACKNOWLEDGE
CLOCK PULSE

SCL LINE
Hi
Low

EP 1 533 708 A2

# FIG.3

I2C MASTER DEVICE

SCL OR SDA SIGNAL

10

12

MULTI-PLEXING/ SEPA-RATING

D 1

D 4

30

20

22

MULTI-PLEXING/ SEPA-RATING

D 2

D 3

SCL OR SDA SIGNAL

I2C SLAVE DEVICE

EP 1 533 708 A2

FIG.4

SDA LINE

Hi

Low

MASTER TRANSMISSION (8 BITS)

SLAVE ADDRESS (7 BITS)

adr1　adr2　adr3　adr7　R/W

INDEFINITE

ACK

DELAY: D
(D1+D2+D3+D4)

SLAVE REPLY

SAMPLING

ACKNOWLEDGE CLOCK PULSE

SCL LINE

Hi

Low

SCL PULSE

10

# FIG.5

10

13          14

11          (a)

Vdd

(h)          16

SCL LINE

17

(d)          18

(b)

I2C MASTER
DEVICE          (c)

TO SIGNAL
RECEIVING
SECTION 20

12

Vdd

13

(e)

(g)

(f)

SDA LINE

DVI SIGNAL INPUT-OUTPUT CIRCUIT

MULTIPLEXING/SEPARATING CIRCUIT

# FIG.6

(a)

Hi

Low

TRAILING EDGE
DETECTION

(b)

Hi

Low

LOW LEVEL
HOLDING TIME T

(c)

Hi

Low

(d)

Hi

Low

# FIG.7

(e) MASTER TRANSMISSION SDA

Hi
Low

adr1 adr2 ≀ adr7 R/W

DELAY TIME: D
(D1+D2+D3+D4)

(f) SLAVE REPLY SDA

Hi
Low

ACK

(g) SDA LINE

Hi
Low

adr1 adr2 ≀ adr7 R/W ACK

SAMPLING

(h) SCL LINE

Hi
Low

SCL PULSE

D

ACKNOWLEDGE
CLOCK PULSE

T T T

DELAY TIME (T)
BY PULSE DELAY
CIRCUIT

EP 1 533 708 A2